# EUROPEAN PATENT APPLICATION

(11) **EP 1 747 836 A1**
(43) Date of publication of application: **31.01.2007**
(21) Application number: 05076717.7
(22) Date of filing: 26.07.2005
(51) Int. Cl.: B23K 26/06

(54) **Laser welding method**

(71) Applicant: Corus Technology BV, 1970 CA IJmuiden (NL)
(72) Inventor: Van der Veldt, Tonny, 1705 HX Heerhugowaard (NL); Goos, Cierick, 1974 LB Ijmuiden (NL); De Wit, Engbert Jan, 1966 MA Heemskerk (NL); Marchal, Pieter Dirk, 8225 TT Lelystad (NL)
(74) Representative: Kruit, Jan

(57) **Abstract**

Metal parts, in particular made from ultra high strength steel, are welded together by using a welding laser beam, which is focused on the material (M) in at least part of a welding zone. After the laser welding, a heat treatment is performed by heating the material by a post weld heat treatment (PWHT) laser beam. The PWHT laser beam (PLB) generates heat in the metal parts preferably by defocusing a laser beam in the welding zone. Preferably, one laser device generates both the welding laser beam and the PWHT laser beam.

## Description

The present invention relates to a welding method, in particular for laser welding of metal parts, such as the welding of tailored blanks or the assembly of (automotive) parts.

In a welding process, a first part and a second part to be welded together at least locally receive a heat input in a welding zone to locally melt the parts. In this process, only a relatively small volume of the parts is heated to a high temperature, and thereafter rapidly cools down.

For ease of reference, in the following a welding zone may comprise a fusion zone where the parts have melted, and a zone adjacent the fusion zone may be indicated as a heat affected zone where the welding heat has affected the material properties. A welding zone may take the form of a line or stitch, or a series of lines or stitches.

Depending on the position, the material in and around the weld in fact reaches a temperature that varies in time. A local peak temperature strongly depends on the position, whereas local heating and cooling rates are mainly determined by a variety of factors including the specific welding process, the material properties of the material, and the dimensions of the material. The material, which may have a carefully designed microstructure to comply with previous or subsequent mechanical, chemical and electrochemical processing of the material and with use requirements, may be adversely affected by the welding process at least in the vicinity of the weld made.

It is known to provide a post weld heat treatment (hereafter also called PWHT) to at least partially restore the properties of the parts in the fusion zone and/or in the heat-affected zone.

A problem of such a PWHT is the additional equipment required. Another problem may be recognized in the control of the heating equipment to generate a predetermined heat input in the welding zone during PWHT.

The object of the invention is to provide a welding method including a post weld heat treatment of a simple and accurate nature.

According to the invention, a method is provided for welding metal parts together, the method comprising: providing, by a laser device, a welding laser beam focused on the metal parts; welding the metal parts together by the welding laser beam in a weld seam or stitch; and providing a heat treatment of the weld seam or stitch after welding, wherein the heat treatment is performed by a post weld heat treatment (PWHT) laser beam. In a first pass the material is irradiated by a welding laser beam in the weld seam or stitch, and in a second pass the material is irradiated in the weld seam or stitch by a PWHT laser beam. The PWHT leaser beam thus provides the post weld heat treatment that conventionally is performed by other techniques such as induction heating, but post weld heat treatment using a PWHT laser beam has the advantage that the heat affected zone can be heated by the PWHT laser beam, and the metal parts outside the welding zone will not, or only to a limited extend, be affected by the post weld heat treatment. Moreover, the exact amount of heat required for the post weld heat treatment can be provided using the PWHT laser beam, so the best heat treatment can be provided for the weld seams or stitches. Laser devices are well suited to accurately generate a laser beam having a predetermined power at predetermined spots or paths on the material to be welded. The method according to the invention can be used for all weld geometries.

The PWHT laser beam is preferably generated by the same laser device as the welding laser beam, thus obviating any additional equipment for a heat treatment. The post weld heat treatment can thus be performed without additional equipment costs. The PWHT laser beam may also be generated by a laser device being different from the laser device generating the welding laser beam. The post weld heat treatment can thus be performed directly after the weld seam or stitch is being made, so almost no extra time will be needed for the post weld heat treatment.

In an embodiment, the PWHT laser beam is a defocused laser beam. This embodiment is well suited when the PWHT laser beam is generated by the same laser device as the welding laser beam, simply by focusing the laser beam while welding, whereas the laser beam is defocused in a predetermined manner for the post weld heat treatment. In an embodiment, a focal point of the PWHT laser beam is situated between the laser device and said material. The focal point may be well observed and set at a distance from the material surface, said distance providing a measure for the amount and/or extension of the heat generated in the material. It is, however, also possible to defocus a PWHT laser beam such that a (virtual) focal point of the PWHT laser beam is situated at the side of the material facing away from the laser device generating the PWHT laser beam. The laser spot of the defocused laser beam is larger than the width of the welding zone.

In another embodiment, the PWHT laser beam is a focused laser beam that is moved in a scanning manner during the post weld heat treatment. In this way, the full width of the welding zone can be heated to the desired temperature for the post weld heat treatment. This embodiment is also very well suited when the PWHT laser beam is generated by the same laser device as the welding laser beam.

In an embodiment, the metal parts are made of ultra high strength steel, sometimes also termed advanced high strength steels. Welding ultra high strength steel leads to a high hardness of the material at and near the weld, this hardness being substantially higher than the original material hardness. The high hardness limits the formability of the material, which limitation may be at least partly relieved by a heat treatment using a PWHT laser beam.

In an embodiment, the laser device used is a Nd:YAG laser device, a CO2 laser device, a fiber laser device or a disk laser device. These laser devices can be used both for generating a welding laser beam and a PWHT laser beam, so no additional equipment is necessary for the post weld heat treatment.

In another embodiment, the laser device used for the heat treatment of the weld seam or stitch is a diode laser device. A diode laser device is especially suited for generating a PWHT laser beam and can be placed behind the laser device for generating a welding laser beam.

Other features and advantages of the invention will become clear with reference to the accompanying drawings, which illustrate non-limiting exemplary embodiments.

Fig. 1 illustrates in side view a laser welding of a material.

Fig. 2 illustrates in side view a laser post weld heat treatment of a material according to an embodiment of the invention.

Fig. 3 depicts hardness trajectories of different experimental samples of an ultra high strength steel after different treatments.

In the various Figures, the same reference symbols relate to the same parts, or parts having a similar function.

In an experiment, two ultra high strength steel materials were used: a sample of DP 1000, and a sample of TRIP 800. Both materials were uncoated. A sample geometry of 500x80 mm was used, with the DP 1000 sample having a thickness of 1.5 mm, and the TRIP 800 sample having a thickness of 1.64 mm.

In the experiment, a laser cell using a Nd:YAG laser was used to obtain bead on plate welds along a predetermined straight weld path. A filler wire was not used. Helium gas was used for shielding and also as a backing gas. Bead on plate welds were made to eliminate all the influencing parameters associated with e.g. a weld seam in a butt weld (*inter alia,* gap opening, misalignment, and edge quality). In a local post weld heat treatment the weld and the heat-affected zone were treated by moving a defocused laser beam along the weld path. Thus, first the laser was used for a welding pass, and in a second pass the same laser was used for a local post weld heat treatment.

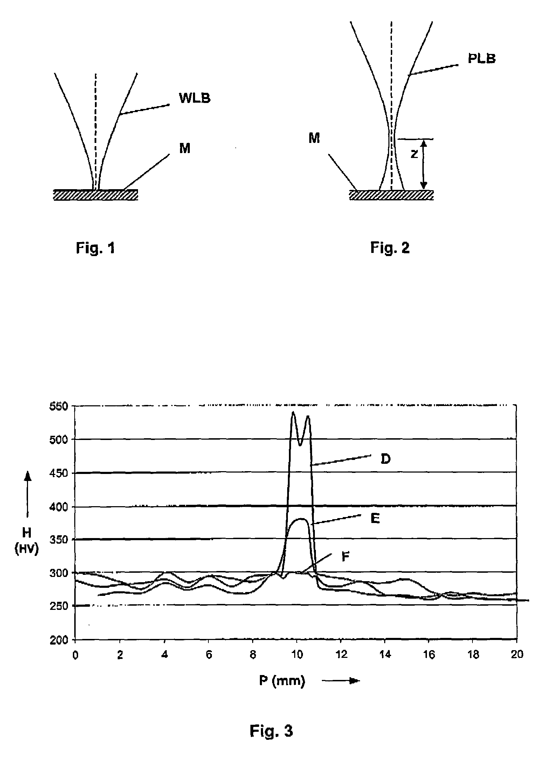

As illustrated in Fig. 1, for the bead on plate welding on a material M a high intensity (small spot size) welding laser beam WLB was used. Therefore, the welding pass was done with the laser in focus, which created a laser spot size on the material M having a diameter of 0.45 mm.

As illustrated in Fig. 2, for a following post weld heat treatment pass the PWHT laser beam PLB was defocused (by a defocus height z), thus enlarging the laser spot size on the material M.

The process settings for the welding pass were kept constant at 2000 W laser power and 5 m/min welding speed, whereas the laser beam settings for post weld heat treatment were varied.

The formability of the welds was tested with the Erichsen cupping test according to standard ISO 20482:2003. In this test a spherical punch is pressed into the clamped material at the weld until a fracture occurs. The height of the resulting dome (in mm) is a measure of the formability of the material. When welds are tested the resulting dome height value is often divided by the value for the base material. This value (percentage) gives an indication of the formability of the welded material compared to the base material. As an example, in automotive applications a relative Erichsen value of at least 70% is often demanded. All Erichsen tests in this experiment were performed in triple and all stated values are average values of three measurements.

When testing the TRIP 800 material (Erichsen value of the base or parent material: 11.7 mm), the main process parameters for the PWHT pass were varied: laser power P (W), processing speed v (m/min) and defocus height z (mm).

The experimental results show that for the TRIP 800 material, a low Erichsen value in the welded condition may be almost fully compensated by the post weld heat treatment, since the Erichsen values of the welds increase from 58% to almost 90% by the post weld heat treatment at optimized parameters for P, v and z. It has been found that the Erichsen value is increased when the backside of the weld reaches a temperature between 250 and 500 °C during the treatment with the PWHT laser beam. The tensile strength remains unchanged when the TRIP 800 material is laser welded and treated with a PWHT laser beam.

Fig. 3 shows the hardness trajectories of different TRIP 800 samples in a metallographical examination, where the horizontal axis shows a position P in mm measured at right angles to a direction of the weld, where the weld is located at position 10 mm. The sample that has been welded and not post weld heat-treated according to line D shows that for the TRIP 800 material the hardness H in the heat affected zone is as high as the hardness outside the welding zone. The TRIP 800 material does not show any softening in the heat-affected zone. Also the sample with PWHT only according to line F shows no softening of the material. A post weld heat treatment after laser welding on the sample according to line E effectively reduces the hardness H in the fusion zone from ±525 HV to ±375 HV, without softening the surrounding material.

When testing the DP 1000 material (Erichsen value of the base or parent material: 9.1 mm), the main process parameters for the post weld heat treatment pass were varied: laser power P (W), processing speed v (m/min) and defocus height z (mm).

It has been found that a local post weld heat treatment using a defocused laser beam can improve the fomaability of a welded sample. It can be concluded that the Erichsen value can be increased from 70% without post weld heat treatment to above 80% for post weld heat treatment at optimized parameters for P, v and z. The tensile strength is reduced when higher laser power P is used for the post weld heat treatment, so the power of the lased device used should be as low as possible.

The experiments also show that the post weld heat treatment successfully decreases the high hardness in the fusion zone.

In the above experiment, bead on plate welding has been used, but the method according to the invention applies to all welding geometries, such as but not limited to butt-welding and stake welding. While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

## Claims

1. Method for welding metal parts together, the method comprising:
■ providing, by a laser device, a welding laser beam focused on the metal parts;
■ welding the metal parts together by the welding laser beam in a weld seam or stitch; and
■ providing a heat treatment of the weld seam or stitch after welding,
wherein the heat treatment is performed by a post weld heat treatment (PWHT) laser beam.

2. Method according to claim 1, wherein the welding laser beam and the PWHT laser beam are generated consecutively by the same laser device.

3. Method according to claim 1 or 2, wherein the PWHT laser beam is a defocused laser beam.

4. Method according to claim 3, wherein a focal point of the PWHT laser beam is situated between the laser device and the metal parts.

5. Method according to claim 1 or 2, wherein the PWHT laser beam is a focused laser beam that is moved in a scanning manner during the post weld heat treatment.

6. Method according to any one of the preceding claims, wherein the metal parts are made of ultra high strength steel.

7. Method according to any one of the preceding claims, wherein the laser device used is a Nd:YAG laser device, a CO₂ laser device, a fiber laser device or a disk laser device.

8. Method according to any one of the claims 1 and 3 - 6, wherein the laser device used for the PWHT of the weld seam or stitch is a diode laser device.
